# EUROPÄISCHE PATENTSCHRIFT

(11) **EP 0 582 360 B1**
(45) Veröffentlichungstag und Bekanntmachung des Hinweises auf die Patenterteilung: **20.05.1998**
(21) Anmeldenummer: 93250211.5
(22) Anmeldetag: 16.07.1993
(51) Int. Cl.: A01N 39/00, A01N 43/08, A01N 37/36

(54) **Desinfektionsmittel auf Carbonsäurebasis**
Disinfecting agent based carboxylic acids
Agent désinfectant à base d'acides carboxyliques

(30) Priorität: 31.07.1992 DE 4225795
(43) Veröffentlichungstag der Anmeldung: 09.02.1994
(73) Patentinhaber: Schülke & Mayr GmbH, 22851 Norderstedt (DE)
(72) Erfinder: Beilfuss, Wolfgang, Dr., D-22339 Hamburg (DE); Diehl, Karl-Heinz, D-22844 Norderstedt (DE); Eggensperger, Heinz, Dr., D-22397 Hamburg (DE); Löwer, Bernd, Dr., D-223337 Hamburg (DE)
(74) Vertreter: UEXKÜLL & STOLBERG

(56) Entgegenhaltungen:
- EP-A- 0 264 658
- WO-A-10/12721
- DE-A- 849 594
- DE-A- 1 105 549
- DE-A- 3 229 097
- DE-A- 4 005 784
- DE-A- 4 026 756
- DE-C- 856 043
- GB-A- 566 139
- GB-A- 1 569 423
- US-A- 1 554 642
- US-A- 4 647 458
- ZEITSCHRIFT FÜR HYGIENE UND INFEKTIONSKRANKHEITEN Bd. 121 , 1938 , BERLIN, DE; Seiten 405 - 431 E. HAILER 'Die Einwirkung keimtötender Stoffe auf Tuberkelbacillen des Typus humanus und bovinus. IV. Mitteilung. Versuche mit Säuren der aromatischen Reihe.'
- ZEITSCHRIFT FüR HYGIENE UND INFEKTIONSKRANKHEITEN Bd. 120 , 1938 , BERLIN, DE; Seiten 664 - 677 E.HAILER 'Die Einwirkung keimtötender Stoffe auf Tuberkelbacillen des Typus humanus und bovinus. II. Mitteilung. Die Wirkung von anorganischen Säuren und Säuren der aliphatischen Reihe'

## Beschreibung

Die Erfindung betrifft Desinfektionsmittel auf Basis von bakterizid wirkenden Carbonsäuren.

Desinfektionsmittel mit bakteriziden Wirkstoffen werden in vielen Bereichen eingesetzt, wobei sie der Bekämpfung von Mikroorganismen dienen. Beispielsweise werden sie zur Desinfektion von Händen, Operationsfeldern, Wunden, Instrumenten, Oberflächen, Wäsche, auf dem Gebiet der Landwirtschaft, im Katastrophenschutz und im Pflanzenschutz verwendet.

Von großem Interesse ist die Wirksamkeit von Desinfektionsmitteln gegen Mykobakterien, insbesondere gegen Tuberkulose-Erreger, die aufgrund ihres strukturellen Aufbaus im Verhältnis zu Bakterien oder Pilzen und Hefen vergleichsweise widerstandsfähig sind, so daß häufig keine Abtötung erfolgt, sondern lediglich ihre Vermehrung für einen kurzen Zeitraum gehemmt wird. Erstrebenswert sind möglichst kurze Einwirkzeiten der Desinfektionsmittel bei nichts destoweniger gründlicher und nachhaltiger Desinfektionswirkung.

Als Wirkstoffe gegen Mykobakterien sind u.a. Aldehyde wie Formaldehyd, Succinaldehyd oder Glutaraldehyd, Phenolverbindungen, Aktivsauerstoffverbindungen wie Peressigsäure, Aminverbindungen wie N,N-Bis(3-aminopropyl)laurylamin, Alkohole wie Ethanol, Isopropanol, n-Propanol oder Phenoxyethanol bekannt. Hierbei handelt es sich überwiegend um lipophile, flüchtige, reaktionsfähige oder alkalisch reagierende Stoffe, die eine Reihe von nachteiligen Eigenschaften aufweisen. Beispielsweise sind sie so wenig wasserlöslich, daß der Einsatz von Lösungsmitteln oder Lösungsvermittlern erforderlich ist, bestehen bei ihrem Einsatz ökotoxikologische Bedenken wie beispielsweise beim Einsatz von Phenolen, führen sie zu einer starken Geruchsbelästigung wie beispielsweise Aldehyde, weisen sie eine unbefriedigende Stabilität auf wie beispielsweise Aktivsauerstoffverbindungen wie Peressigsäure, erfordert ihre Flüchtigkeit, ihr Flammpunkt und ihre Brennbarkeit besondere Aufmerksamkeit und Sorgfalt bei der Handhabung wie beispielsweise niedere Alkohole, besteht die Möglichkeit der Bildung von Nitrosaminen wie beispielsweise bei Aminen, ist aufgrund ihrer vergleichsweise schwachen bis mittleren Wirksamkeit eine hohe Einsatzkonzentration erforderlich wie bei aromatischen Alkoholen oder besteht Unverträglichkeit mit anderen Formulierungsbestandteilen wie beispielsweise bei Aminen oder aromatischen Alkoholen, die, wenn sie zusammen mit kationenaktiven Verbindungen eingesetzt werden, auf Oberflächen aufziehen und durch anionischen Tenside desaktiviert werden.

Aus der DE-AS-1 105 549 sind desinfizierende Wasch- und Reinigungsmittel bekannt, die ein Gemisch von freier Milchsäure in Kombination mit anderen Desinfektionsmitteln wie Aldehyden oder Phenolen wie Phenol, Kresol, o-Phenylphenol, Benzylphenol und halogenierte Derivate derselben enthalten. Gegebenenfalls können auch anionischen Tenside wie Alkylsulfonaten vorhanden sein. Diese Mittel sind jedoch gegenüber den widerstandsfähigen Mykobakterien nicht wirksam.

Ferner ist aus der DE 32 29 097 bekannt, daß Kombinationen von Alkylsulfonaten bzw. Alkylsulfaten mit Carbonsäuren wie Weinsäure, Milchsäure, Benzoesäure, Furan-2-carbonsäure oder Pyridincarbonsäure und gegebenenfalls unter Zusatz von Lösungsvermittlern wie Ethanol oder Propanol antibakteriell und fungizid wirken.

Aus der DE-A-40 26 756 ist ein Konservierungsmittel bekannt, das aus einer Kombination von Carbonsäure, Alkohol und Biguanid gebildet wird. Jeder dieser drei Bestandteile ist für die Erzielung der gewünschten bakteriziden Wirkung wesentlich. Die einzelnen Bestandteile dieser Kombination, insbesondere Carbonsäuren wie Sorbinsäure und Salicylsäure bzw. Monophenylglykolether wie Phenoxyethanol und Phenoxypropanol und Alkohole wie Benzylalkohol, haben keine antimikrobielle Wirkung, eine nur unzureichende antimikrobielle Wirkung oder nur eine antimikrobielle Wirkung, wenn sie in hohen Konzentrationen eingesetzt werden.

Aus der US-A-4 647 458 ist bekannt, daß eine Kombination von Ethanol mit einer organischen Säure wie beispielsweise Milchsäure und mindestens 1% Phosphorsäure bakterizid wirksam ist. Die Phosphorsäure ist dabei ein wesentlicher Bestandteil dieser bekannten Kombination. Allerdings ist in Tabelle 2 zu Vergleichszwecken eine Kombination aus Carbonsäure und Ethanol getestet worden. Als geeignetes Bakterium ist E. coli genannt, bei dem es sich um ein leicht zu bekämpfendes Bakterium handelt.

Aus der US-A-1 554 642 ist ein germizides Mittel bekannt, das Furancarbonsäure als Wirkstoff und Ethanol als Lösungsmittel enthält.

Aus "Die Einwirkung keimtötender Stoffe auf Tuberkelbacillen des Typus humanus und bovinus" von E. Hailer in Zeitschr. f. Hygiene und Infektionskrankheiten, 120, 664-677 (1938) ist die Wirkung von anorganischen und aliphatischen Säuren gegenüber Tuberkelbazillen beschrieben. Es werden wässrige Lösungen eingesetzt.

Aus der EP-A-264 658 ist die Verwendung einer Kombination eines Aldehyds wie beispielsweise Glutaraldehyd mit Phenoxyethanol zur Sterilisierung bekannt. Das Aldehyd wird als zwingender Bestandteil angesehen, der nicht durch Verbindungen einer anderen Stoffklasse ersetzbar ist. Eine bakterizide Wirkung von Phenoxyethanol oder eine Verbesserung der Wirkung von Glutaraldehyd durch Phenoxyethanol sind nicht erwähnt. Es ist die Verringerung eines Wirkungsverlustes von Aldehydlösungen beabsichtigt.

In der WO-A-91/12721 ist ein Bakterizid beschrieben, das Phenoxyethanol in Kombination mit komplexiertem Jod umfaßt.

Aus der GB-A-556 139 ist bekannt, daß Ethylenglycolether wie beispielsweise Phenoxyethanol eine bakterizide Wirkung aufweisen.

Aus der DE-C-856 043 ist eine bakterizide Wirkung von Phenoxyalkoholen wie beispielsweise Phenoxypropanol bekannt.

Aus DE-A-40 05 784 sind mykobakterizide Wirkungen von Kombinationen von Phenoxyethanol oder -propanol mit Guanidinium und/oder quaternären Ammoniumverbindungen, nicht ionischen Tensiden und einem Alkalisierungsmittel bekannt.

Der Erfindung liegt daher die Aufgabe zugrunde, Wirkstoffe bzw. Wirkstoffkombinationen zur Verfügung zu stellen, die gegenüber Mykobakterien ausgezeichnet und schnell wirksam sind, dabei aber auch hinreichend wasserlöslich, geruchsarm, nicht-flüchtig, hinreichend stabil, umweltverträglich, biologisch gut abbaubar, mit anderen Formulierungsbestandteilen gut verträglich, in breitem Umfang mikrobizid wirksam und preiswert zugänglich sind.

Als Lösung dieser Aufgabe wird vorgeschlagen, zur Bekämpfung von Mykobakterien ein Desinfektionsmittel auf Carbonsäurebasis einzusetzen, daß dadurch gekennzeichnet ist, daß es außer einer Carbonsäurekomponente eine Alkoholkomponente enthält, wobei die Carbonsäurekomponente mindestens eine Verbindung ausgewählt aus Milchsäure und Furan-2-carbonsäure umfaßt und die Alkoholkomponente mindestens einen Alkohol ausgewählt aus Phenoxyethanol, Phenoxypropanol oder Tetraethylenglykolmonophenylether umfaßt, welche in auf Mykobakterien synergistisch wirkenden Mengen Verhältnissen vorliegen.

Bevorzugte Ausführungsformen sind Gegenstand der Unteransprüche.

Es hat sich überraschenderweise gezeigt, daß eine Kombination aus den erfindungsgemäßen Carbonsäuren und Alkoholen, sowohl jeweils einzeln als auch in Kombination von zwei oder mehreren derselben, eine ausgezeichnete Wirksamkeit gegen Mykobakterien aufweisen und das gewünschte Anforderungsprofil erfüllen.

Die erfindungsgemäßen Carbonsäuren sind Milchsäure und Furan-2-carbonsäure. Gut geeignet ist insbesondere die geruchsarme und gut wasserlösliche Milchsäure, die praktisch keine eigene Tb-Wirksamkeit aufweisen, aber in Gegenwart der Alkohole eine ausgezeichnete, synergistische Tb-Wirksamkeit entfalten. Ferner ist die begrenzt wasserlösliche Furan-2-carbonsäure gut geeignet.

Die erfindungsgemäßen Alkohole sind Phenoxyethanol, Phenoxypropanol, Solvenon PP (ein Gemisch von 1-Phenoxy-2-propanol und 2-Phenoxy-1-propanol) und Tetraethylenglykolmonophenylether. Besonders bevorzugt ist Phenoxyethanol.

Die erfindungsgemäßen Carbonsäuren können entweder in ihrer Säureform oder in Form eines ihrer Salze beispielsweise ihrer Alkalimetallsalze eingesetzt werden. Aus diesen Salzen können sie durch in der fertigen Formulierung vorhandene Säuerungsmittel wie beispielsweise organische oder anorganische Säuren oder saure Reinigungsmittel in die wirksamere Säureform überführt werden.

Die erfindungsgemäßen, Tb-wirksamen Kombinationen aus Carbonsäuren und Alkoholen können in Form einer wäßrigen Geßrauchslösung (ready-for-use-Lösung), eines Flüssig-Konzentrats, Pulvers oder Granulats oder auf Trägern wie beispielsweise Tüchern aufgezogen vorliegen.

Vorteilhaft ist, daß die erfindungsgemäßen, Tb-wirksamen Kombinationen auch in Form eines flüssigen Konzentrats, Pulvers, Granulats oder auf einen Träger aufgezogen eine ausgezeichnete Stabilität aufweisen und aufgrund ihrer hinreichenden Wasserlöslichkeit durch einfaches Verdünnen mit, Auflösen in oder Ausspülen mit Wasser eine aktivierte Wirkstofflösung mit wiederum ausgezeichneter Haltbarkeit hergestellt werden kann.

Eine gebrauchsfertige Lösung kann entweder sauer oder alkalisch reagieren, weist vorzugsweise einen pH-Wert von bis zu 7, bevorzugter bis zu 5 und besonders bevorzugt bis zu 4 auf.

Zur Erzielung einer ausreichenden desinfizierenden Wirkung liegt die Konzentration der erfindungsgemäßen Carbonsäuren bzw. ihrer Salze bezogen auf das Gesamtgewicht der Lösung im Bereich von 0,01 bis 8%, vorzugsweise 0,1 bis 6 %, bevorzugter 0,2 bis 4 % und insbesondere 0,5 bis 2% und die Konzentration der erfindungsgemäßen Alkohole im Bereich von 0,05 bis 40%, vorzugsweise 0,1 bis 20%, bevorzugter 0,2 bis 10% und insbesondere 0,5 bis 5%. Bei alkoholischen Sprühpräparaten bzw. gebrauchsfertigen Lösungen (bevorzugte Alkohole sind Ethanol, Isopropanol und n-Propanol) liegt der Alkoholgehalt aufgrund dieser zusätzlichen Alkohole zwischen 10 und 90 Gew.%, bevorzugt 20 und 80 Gew.%.

Aufgrund der überraschenden synergistischen Wirkungssteigerung bei Verwendung der erfindungsgemäßen Wirkstoffkombination im Vergleich zur Verwendung der Einzelkomponenten gegenüber Mykobakterien ist es möglich, bei gleicher Einsatzkonzentration kürzere Einwirkzeiten vorzusehen bzw. bei gleichen Einwirkzeiten die Konzentrationen zu verringern.

Darüber hinaus können die die erfindungsgemäßen Carbonsäuren und Alkohole enthaltenden Formulierungen zusätzlich in Mischung mit im Desinfektionsbereich üblichen Hilfs-, Zusatz- und/oder anderen bakteriziden Wirkstoffen eingesetzt werden. Hierfür kommen beispielsweise Aldehyde, Amine, Ether, kationenaktive Verbindungen, nicht-ionische, anionischen oder amphotere Tenside, Korrosionsschutzmittel, Parfüm, Farbstoffe oder Komplexbildner in Frage.

Durch die Kombination mit anderen Wirkstoffen kann in Abhängigkeit vom Anwendungszweck ein breiteres Wirkungsspektrum erzielt werden. Verträgliche mit den erfindungsgemäßen Carbonsäuren kombinierbare Wirkstoffe sind beispielsweise Aldehyde wie Formaldehyd, Succinaldehyd, Glutaraldehyd oder Glyoxal, kationische Verbindungen wie Benzalkoniumchlorid, Aktivsauerstoffverbindungen wie H₂O₂, Peressigsäure, Perglutarsäure oder tert. Butylhydroperoxid.

Ein weiterer Vorteil bei der Anwendung der erfindungsgemäßen Carbonsäuren besteht darin, daß sie aufgrund ihrer geringen Flüchtigkeit relativ geruchsarm sind. Darüber hinaus sind sie biologisch gut abbaubar und umweltverträglich.

Als Tenside oder Netzmittel eignen sich beispielsweise nichtionische Tenside wie Fettalkoholpolyglykolether, anionische Tenside wie Alkylsulfonate, Alkylsulfate, Alkylethersulfate sowie Gemische derselben, wobei die Tenside auch zur Schaumregulierung bzw. zur Unterstützung einer Reinigungsaktivität und der Wirksamkeit beitragen können. Bevorzugte erfindunggemäße Desinfektionsmittel enthalten neben den Carbonsäuren und Alkoholen auch anionische Tenside wie Fettalkylsulfonate, Fettalkylsulfate, Fettalkylethersulfate oder Gemische derselben. Insbesondere die Kombination mit anionischen Tensiden ist wünschenswert, da es hierbei zu einer synergistischen Wirkungssteigerung kommt.

Geeignete Komplexbildner sind beispielsweise Ethylendiamintetraessigsäure (EDTA), Nitrilotriessigsäure (NTA) und Dihydroxyethylglycin oder deren Salze, die die biozide Wirksamkeit ebenfalls verbessern können.

Mittel zur Korrektur des pH-Werts wie anorganische oder organische Säuren, Basen oder Salze derselben können ebenfalls zusammen mit den erfindungsgemäßen Carbonsäuren verwendet werden.

Als Füllstoff bzw. Träger sind im allgemeinen inerte Stoffe wie Natriumsulfat und ähnliche Stoffe geeignet.

Formulierungen, die die erfindungsgemäßen Carbonsäuren enthalten, sind lagerstabil, besitzen eine hohe mikrobizide Wirksamkeit und darüber hinaus ein breites Wirkungsspektrum, wodurch neben Bakterien, Hefen und Pilzen insbesondere die schwer zu inaktivierenden Mykobakterien wirksam bekämpft werden können. Ferner wirken die erfindungsgemäßen Desinfektionsmittel viruzid.

Gegenüber bekannten Desinfektionsmitteln bieten Formulierungen auf Basis der erfindungsgemäßen Carbonsäuren insbesondere folgende Vorteile:
- Wirksamkeit auch bei Temperaturen unter 18°C,
- kein Auftreten von Schaumproblemen,
- ausgezeichnete Stabilität und Haltbarkeit,
- geringe Flüchtigkeit der Wirkstoffe, Geruchsarmut,
- biologische Abbaubarkeit und gefahrlose Handhabbarkeit,
- ausgezeichnete Wirksamkeit bei breitem Wirkungsspektrum mit kurzen Einwirkzeiten,
- durch Erhöhung des pH-Wertes erfolgt Überführung in die entsprechenden weniger aktiven Salzlösungen, während durch Erniedrigung des pH-Wertes die ursprüngliche Wirksamkeit wieder hergestellt werden kann,
- zum Teil Wirkungssteigerung bei Kombination mit anderen Hilfs-, Zusatz- oder Wirkstoffen,
- gute bis sehr gute Materialverträglichkeit,
- Unterstützung der Reinigungswirkung,
- ökonomisch und ökologisch effektiverer Einsatz.

Der Ausdruck Stabilität bezieht sich im vorliegenden Zusammenhang sowohl auf das Aussehen der Lösungen (keine Niederschläge, Trübungen, Inhomogenitäten) als auch auf die Konstanz des pH-Wertes und die Konstanz der Wirkstoffgehalte.

Formulierungen auf Basis der erfindungsgemäßen Carbonsäuren und Alkohole eignen sich zur Behandlung von Flächen, Instrumenten, Geräten, Haut und Händen. Sie können beispielsweise in Krankenhäusern, Arztpraxen, öffentlichen und privaten Einrichtungen wie Bädern, Saunen, Sportgaststätten, Hotels, Haushalt (Bad, Küche), Industriebetrieben, insbesondere in der lebensmittelverarbeitenden Industrie, Kosmetik- und Pharmaindustrie, in der Landwirtschaft (Tierhaltung, Pflanzenzucht, Gartenbau), im Katastrophenschutz oder im Pflanzenschutz eingesetzt werden.

Insbesondere der Einsatz anstelle von Percarbonsäuren wie Peressigsäure, die sehr reaktionsfreudig, zum Teil sehr geruchsintensiv und nur begrenzt stabil sind, ist denkbar.

Die Erfindung wird anhand der folgenden Beispiele näher erläutert. Wenn nicht anders angegeben, sind alle Teil- und Prozentangaben auf das Gewicht bezogen.

### Beispiel 1

Es wurde die Wirksamkeit von Milchsäure bzw. Furan-2-carbonsäure allein, von Phenoxyethanol allein und von Milchsäure bzw. Furan-2-carbonsäure in Kombination mit Phenoxyethanol (10 Teile Milchsäure/Furan-2-carbonsäure plus 90 Teile Phenoxyethanol) gegen Myko-bact. terrae im Instrumentenversuch gemäß DGHM getestet.

Dazu wurden wäßrige Lösungen der zu testenden Wirkstoffe bzw. der erfindungsgemäßen Kombination mit den in Tabelle I angegebenen Einsatzkonzentrationen hergestellt (2% Einsatzkonzentration bedeutet 2 Gewichtsteile Wirkstoff/Wirkstoffkombination + 98 Gewichtsteile Wasser).

**Tabelle I**

| Lösungsmittel : Wasser | | | | | |
|---|---|---|---|---|---|
| Produkt | Einsatzkonz. | Einwirkzeit: | | | |
| | | 15' | 30' | 45' | 60' |
| Milchsäure | 2% | + + + + | + + + + | + + + | + + + |
| | 1% | 8 | 8 | 8 | 8 |
| 10 Tle Milchsäure + 90 Tle Phenoxyethanol | 2% | - | - | - | - |
| | 1% | 8 | 8 | 8 | 8 |
| Furan-2-carbonsäure | 1% | - | - | - | - |
| | 0,5% | + + + + | E | - | - |
| | 0,25% | 8 | + + + + | + + + + | + + + |
| 10 Tle Furan-2-carbs. + 90 Tle Phenoxyethanol | 2% | - | - | - | - |
| | 1% | + + + | + + + | + + | + |
| | 0,5 | + + + + | + + + + | + + + + | + + + + |
| Phenoxyethanol | 1,8% | + + + | + | M | E |
| Legende: 8 = sehr starkes Wachstum, + + + + bzw. + + + bzw. + + bzw. + bzw. M bzw. E = starkes bis vereinzeltes Wachstum in abnehmender Rangfolge, - = kein Wachstum | | | | | |

Die getesteten Carbonsäuren zeigen in Kombination mit einem Alkohol wie Phenoxyethanol eine synergistische Wirkungssteigerung gegen Mykobakterien.

### Beispiel 2

Ferner wurde die Wirksamkeit der erfindungsgemäßen Desinfektionsmittel gegenüber Bakterien und Pilzen getestet.

Wäßrige Lösungen von Kombinationen aus Furan-2-carbonsäure und Phenoxethanol bzw. Tetraethylenglykolmonophenylether (Rewopal MPG 40) wurden im Suspensionsversuch ohne Serumbelastung im Vergleich zu den Einzelwirkstoffen geprüft.

Wie die folgende Tabelle II zeigt, wird die keimtötende Wirksamkeit von Furan-2-carbonsäure in Gegenwart der Alkohole deutlich verbessert, insbesondere bei gram-negativen Bakterien. Die Kombination von Furan-2-carbonsäure mit Phenoxyethanol ist etwas wirksamer als die von Furan-2-carbonsäure mit Tetraethylenglykolmonophenylether.

**Tabelle II**

| Suspensionsversuch ohne Serumbelastung, Abtötung in Minuten | | | | | | |
|---|---|---|---|---|---|---|
| Wirkstoff-Konz.: | | SA | PS | PR | CA | AN |
| FC | Rewo | | | | | |
| | 1,8 % | >60' | >60' | >60' | >60' | >60' |
| 0,2% | + 1,8 % | >60' | 5' | 5' | 60' | 30' |
| 0,1% | + 0,9% | >60' | 5' | 30' | >60' | >60' |
| 0,05% | + 0,45% | >60' | 5' | >60' | >60' | >60' |
| 0,025% | + 0,225% | >60' | 5' | >60' | >60' | >60' |
| 0,8% | | 30' | 5' | 5' | 5' | 5' |
| 0,4% | | >60' | 15' | 15' | 60' | 15' |
| 0,2% | | >60' | 60' | 30' | >60' | 60' |
| 0,1% | | >60' | >60' | >60' | >60' | >60' |

| FC | POE | | | | | |
|---|---|---|---|---|---|---|
| 0,2% | + 1,8% | 15' | 5' | 5' | 5' | 15' |
| 0,1% | + 0,9% | >60' | 5' | 5' | >60' | 60' |
| 0,05% | + 0,45% | >60' | 15' | >60' | >60' | >60' |
| 0,025% | + 0,225% | >60' | >60' | >60' | >60' | >60' |
| | 1,8% | 60' | 5' | 5' | 60' | 30' |
| | 0,9% | >60' | >60' | >60' | >60' | >60' |
| Legende: FC = Furan-2-carbonsäure SA = Staph. aureus PR = Prot. vulgaris AN = Asperg. niger Rewo = Rewopal MPG 40 PS = Pseud. aeruginosa CA = Cand. albicans POE = Phenoxyethanol | | | | | | |

## Patentansprüche

1. Desinfektionsmittel auf Carbonsäurebasis, dadurch gekennzeichnet, daß es außer einer Carbonsäurekomponente eine Alkoholkomponente enthält, wobei die Carbonsäurekomponente mindestens eine Verbindung ausgewählt aus Milchsäure und Furan-2-carbonsäure umfaßt und die Alkoholkomponente mindestens einen Alkohol ausgewählt aus Phenoxyethanol, Phenoxypropanol oder Tetraethylenglykolmonophenylether umfaßt und die beiden Komponenten in auf Mykobakterien synergistisch wirkenden Mengenverhältnissen vorliegen.

2. Desinfektionsmittel nach Anspruch 1, dadurch gekennzeichnet, daß die Carbonsäurekomponente in Salzform und/oder in Form einer wäßrigen Lösung vorliegt.

3. Desinfektionsmittel nach Anspruch 1 oder 2, dadurch gekennzeichnet, daß die wäßrige Lösung einen pH-Wert von bis zu 7, insbesondere bis zu 5 und speziell bis zu 4 aufweist.

4. Desinfektionsmittel nach einem der vorhergehenden Ansprüche, dadurch gekennzeichnet, daß die Carbonsäurekomponente in einer Konzentration von 0,01 bis 8 Gew.%, insbesondere 0,1 bis 6 Gew.% und speziell 0,2 bis 4 Gew.% eingesetzt wird.

5. Desinfektionsmittel nach einem der vorhergehenden Ansprüche, dadurch gekennzeichnet, daß die Alkoholkomponente in einer Konzentration von 0,05 bis 40 Gew.%, insbesondere 0,1 bis 20 Gew.% und speziell 0,2 bis 10 Gew.% eingesetzt wird.

6. Desinfektionsmittel nach einem der Ansprüche 1 oder 2, dadurch gekennzeichnet, daß die Carbonsäurekomponente und die Alkoholkomponente in Form einer Flüssig-Konzentrat-, Pulver- oder Granulat-Formulierung oder auf einen Träger aufgezogen eingesetzt werden.

7. Desinfektionsmittel nach einem der vorhergehenden Ansprüche, dadurch gekennzeichnet, daß die Carbonsäurekomponente und die Alkoholkomponente in Kombination mit im Desinfektionsbereich üblichen Hilfs-, Zusatz- und/oder Wirkstoffen eingesetzt werden.

8. Desinfektionsmittel nach einem der vorhergehenden Ansprüche, dadurch gekennzeichnet, daß die Carbonsäurekomponente und die Alkoholkomponente in Mischung mit Aldehyden, Aminen, Ethern, kationenaktiven Verbindungen, nicht-ionischen, anionischen oder amphoteren Tensiden und insbesondere mit anionischen Tensiden eingesetzt werden.

9. Verwendung eines Desinfektionsmittels gemäß einem der Ansprüche 1 bis 8 zur Bekämpfung von Mykobakterien.

## Claims

1. Disinfectant based on carboxylic acid, characterised in that it contains an alcohol component in addition to a carboxylic acid component, the carboxylic acid component containing at least one compound selected from lactic acid and furan-2-carboxylic acid and the alcohol component containing at least one alcohol selected from phenoxyethanol, phenoxypropanol or tetraethylene glycol monophenyl ether, and both compounds being present in proportions which act synergistically on mycobacteria.

2. Disinfectant according to claim 1, characterised in that the carboxylic acid component is present in salt form and/or in the form of an aqueous solution.

3. Disinfectant according to claim 1 or 2, characterised in that the aqueous solution has a pH of up to 7, particularly up to 5 and especially up to 4.

4. Disinfectant according to one of the preceding claims, characterised in that the carboxylic acid component is used in a concentration of 0.01 to 8 wt.%, particularly 0.1 to 6 wt.% and especially 0.2 to 4 wt.%.

5. Disinfectant according to one of the preceding claims, characterised in that the alcohol component is used in a concentration of 0.05 to 40 wt.%, particularly 0.1 to 20 wt.% and especially 0.2 to 10 wt.%.

6. Disinfectant according to one of claims 1 or 2, characterised in that the carboxylic acid component and the alcohol component are used in the form of a liquid concentrate, powder or granular formulation or collected on a support.

7. Disinfectant according to one of the preceding claims, characterised in that the carboxylic acid component and the alcohol component are used in combination with auxiliaries, additives and/or active ingredients customary in the disinfection sector.

8. Disinfectant according to one of the preceding claims, characterised in that the carboxylic acid component and the alcohol component are used mixed with aldehydes, amines, ethers, cationic compounds, non-ionic, anionic or amphoteric surfactants and particularly with anionic surfactants.

9. Use of a disinfectant according to one of claims 1 to 8 for combatting mycobacteria.

## Revendications

1. Agent désinfectant à base d'acide carboxylique, caractérisé en ce qu'il contient outre un composant d'acide carboxylique, un composant d'alcool, le composant d'acide carboxylique contenant au moins un composé choisi parmi l'acide lactique et l'acide furane-2-carboxylique et le composant d'alcool comprenant au moins un alcool choisi parmi le phénoxyéthanol, le phénoxypropanol ou le tétraéthylèneglycolmonophényléther et les deux composants sont présents à une proportion quantitative ayant un effet synergique sur les mycobactéries.

2. Agent désinfectant selon la revendication 1, caractérisé en ce que le composant d'acide carboxylique est présent sous forme de sel et/ou sous la forme d'une solution aqueuse.

3. Agent désinfectant selon la revendication 1 ou 2, caractérisé en ce que la solution aqueuse présente une valeur du pH pouvant atteindre 7, en particulier 5 et spécialement 4.

4. Agent désinfectant selon l'une quelconque des revendications précédentes, caractérisé en ce que le composant d'acide carboxylique est utilisé à une concentration de 0,01 à 8% en poids, en particulier de 0,1 à 6% en poids et plus spécialement de 0,2 à 4% en poids.

5. Agent désinfectant selon l'une quelconque des revendications précédentes, caractérisé en ce que le composant d'alcool est utilisé à une concentration de 0,05 à 40% en poids, en particulier de 0,1 à 20% en poids et plus spécialement de 0,2 à 10% en poids.

6. Agent désinfectant selon l'une quelconque des revendications 1 ou 2, caractérisé en ce que le composant d'acide carboxylique et le composant d'alcool sont utilisés sous la forme d'un concentré liquide, d'une poudre ou d'une formulation en granulés ou bien disposés sur un support.

7. Agent désinfectant selon l'une quelconque des revendications précédentes, caractérisé en ce que le composant d'acide carboxylique et le composant d'alcool sont utilisés en combinaison avec les agents auxiliaires, additifs et/ou actifs habituels dans le domaine de la désinfection.

8. Agent désinfectant selon l'une quelconque des revendications précédentes caractérisé en ce que le composant d'acide carboxylique et le composant d'alcool sont utilisés en mélange avec des aldéhydes, des amines, des éthers, des composés cationiques, des agents tensioactifs non ioniques, anioniques ou amphotères et en particulier avec des agents tensio-actifs anioniques.

9. Utilisation d'un agent désinfectant selon l'une quelconque des revendications 1 à 8, pour combattre les mycobactéries.
